# EUROPÄISCHE PATENTSCHRIFT

(11) **EP 0 958 907 B1**
(45) Veröffentlichungstag und Bekanntmachung des Hinweises auf die Patenterteilung: **02.01.2003**
(21) Anmeldenummer: 99109763.5
(22) Anmeldetag: 18.05.1999
(51) Int. Cl.: B28D 1/12, B23D 61/02, B24D 5/12

(54) **Kreisscheibenförmiges Werkzeug mit Stossabsorptionsfähigkeit**
Disc-shaped tool with shock absorbing properties
Outil sous forme de disc possédant des propriétés d'absorption de chocs

(30) Priorität: 20.05.1998 DE 19822742
(43) Veröffentlichungstag der Anmeldung: 24.11.1999
(73) Patentinhaber: ARNTZ GmbH & Co. KG, 42855 Remscheid (DE)
(72) Erfinder: Huelmann, Erich, 42853 Remscheid (DE)
(74) Vertreter: Solf, Alexander Dr.

(56) Entgegenhaltungen:
- EP-A- 0 141 042
- EP-A- 0 376 676
- EP-A- 0 578 625
- EP-A- 0 598 389
- EP-A- 0 640 422
- DE-U- 1 773 900
- US-A- 5 092 082
- PATENT ABSTRACTS OF JAPAN vol. 013, no. 385 (M-864), 25. August 1989 (1989-08-25) -& JP 01 135479 A (TAKU KAWAMURA), 29. Mai 1989 (1989-05-29)
- PATENT ABSTRACTS OF JAPAN vol. 016, no. 141 (M-1232), 9. April 1992 (1992-04-09) -& JP 04 002410 A (OSAKA DIAMOND IND CO LTD), 7. Januar 1992 (1992-01-07)

## Beschreibung

Die Erfindung betrifft ein kreisscheibenförmiges Werkzeug. Dies kann beispielsweise ein Kreissägeblatt, Kreismesser, Häckselmesser, Schleifscheibe, Trennscheibe oder dergleichen sein.

Rotierende Sägeblätter der erfindungsgemäßen Art werden z.B. zum Trennen, Schlitzen oder Nuten von Naturstein, Kunststein, Beton, Asphalt, Metall oder Holz verwendet.

Es ist bekannt, zur Schwingungsdämpfung Schlitze in das Sägeblatt einzubringen. Dabei ist auch bekannt, in einer äußeren peripheren Ringzone und in einer spannlochnahen Ringzone Schlitze vorzusehen und dabei sehr viel mehr Schlitze in der äußeren Ringzone anzuordnen (EP 0 598 389 A1). Zudem ist bekannt, in die Schlitze dämpfende Füllungen (DE-AS 1 050 987), z.B. ein Geräuschdämpfungsmaterial aus Kunststoff (DE 3 346 321 A1) oder versiegelndes, gegebenenfalls elastisches Füllmaterial (WO 85/050 64) einzubringen.

Es hat sich jedoch herausgestellt, daß alle bisherigen Maßnahmen zur Schwingungsdämpfung im Betrieb die Bruchgefahr erhöhen und die Standfestigkeit des Sägeblatts beeinträchtigen können. Aus der EP-A-0 640 422 ist ein Werkzeug gemäß Oberbegriff des Patentanspruchs 1 bekannt. Aufgabe der Erfindung ist, Dämpfungsmittel, insbesondere Stoßdämpfungsmittel zu schaffen bzw. anzubringen, die einfach herstellbar sind und das Werkzeug bruchsicherer und standfester gestalten, wobei zudem gewährleistet werden soll, daß insbesondere in großformatige scheibenförmige Werkzeuge trotz der Dämpfungsmittel in üblicher Weise Spannungen eingebracht werden können.

Diese Aufgabe wird durch die Merkmale des Anspruchs 1 gelöst.

Vorteilhafte Weiterbildungen der Erfindung werden in den Unteransprüchen gekennzeichnet. Anhand der Zeichnung wird die Erfindung im folgenden beispielhaft näher erläutert. Es zeigen:
- Fig. 1: eine Draufsicht auf ein erfindungsgemäßes Kreissägeblatt;
- Fig. 2: die Einzelheit x aus Fig. 1;
- Fig. 3: die Einzelheit y aus Fig. 1;

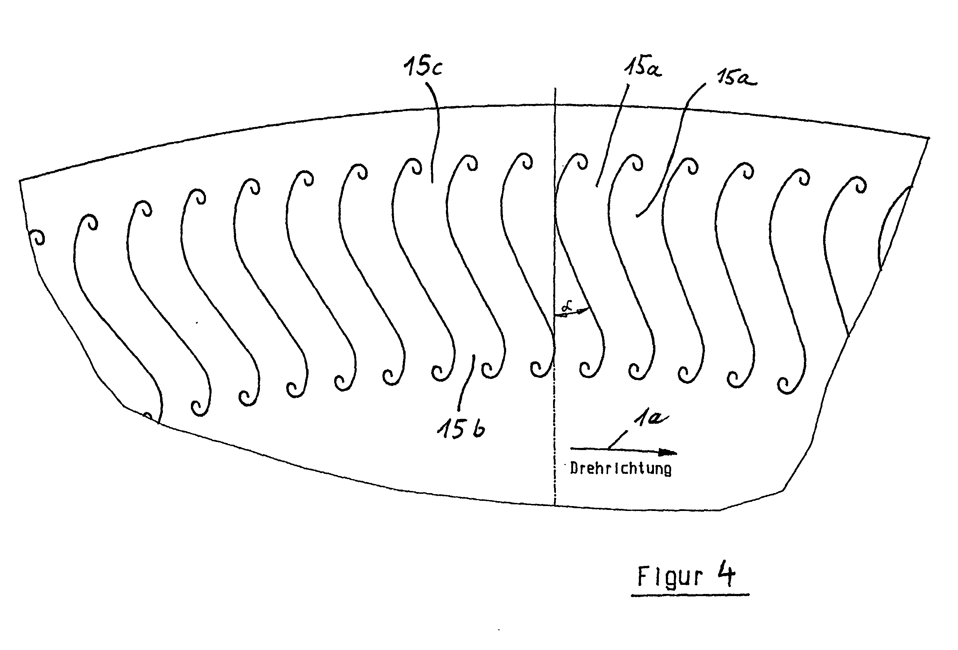

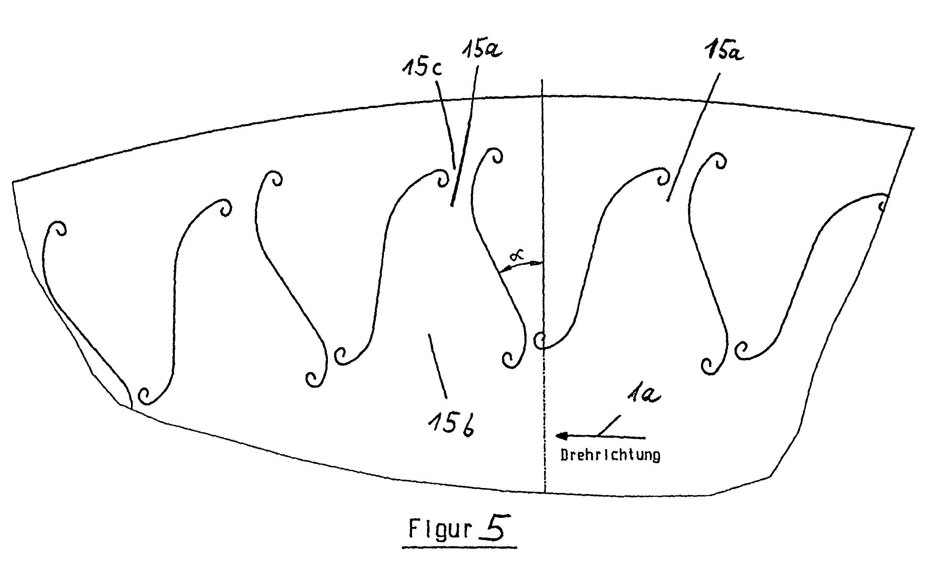

- Fig. 4 und 5: verschiedene Speichenformen in der Stoßdämpfungszone.

Ein erfindungsgemäßes Kreissägeblatt 1 besteht im wesentlichen aus dem kreisscheibenförmigen Stammblatt 2 mit einem zentralen Spannloch 3 und einer peripheren Kranzzone 4. In der Kranzzone 4 sind nach außen ragende Schneidelemente ausgebildet. Die Schneidelemente können z.B. Sägezähne (nicht dargestellt) oder Schleifkörper (nicht dargestellt) oder dergleichen sein.

Das beispielhaft abgebildete Kreissägeblatt weist in der Kranzzone 4 radial sich nach außen erstreckende Segmentstege 5 und zwischen den Segmentstegen U-förmige Nuten 6 auf. Die Segmentstege 5 werden in an sich bekannter Weise z.B. mit Schleifkörpern bestückt (nicht dargestellt). Die Kranzzone 4 weist im abgebildeten Beispiel somit eine der Nuttiefe entsprechende Ringzonenbreite auf.

Das Kreissägeblatt 1 wird auf eine Welle 7 einer Sägemaschine (nicht dargestellt) gesteckt und mit Spannflanschen 8 auf der Welle 7 festgesetzt. Aus dieser Anordnung resultiert eine Spannflanschzone 8a um das Spannloch 8 herum mit dem Spannflanschdurchmesser "D".

Für die Zwecke der Erfindung sind im Stammblattmaterial durch in einer peripheren Ringzone 14 gruppiert eingebrachte Trennschlitze 15 Speichenstege 15a angeordnet.

Diese aus der Schlitzgruppierung 13 resultierenden Speichenstege 15a sind in einer Ringzone 14 untergebracht, die etwas von der Kranzzone 4, z.B. um etwa eine Nuttiefe - eine schmale schlitzfreie Randzone 4a freilassend - beabstandet ist. Die Breite der Ringzone 14 beträgt vorzugsweise bei Werkzeugdurchmessern bis 800 mm 40 bis 120 mm; bei Werkzeugdurchmessern von 800 bis 1600 mm 80 bis 300 mm; bei Werkzeugdurchmessern über 1600 mm 80 bis 500 mm. Die Breite der Randzone 4a beträgt vorzugsweise bei Werkzeugdurchmessern bis 800 mm 10 bis 50 mm; bei Werkzeugdurchmessern von 800 bis 1600 mm 10 bis 80 mm; bei Werkzeugdurchmessern über 1600 mm 10 bis 150 mm.

Die Trennschlitze 15 in der Ringzone 14 sind zweckmäßigerweise 0,2 bis 0,8 mm breit und laufen beidendig in an sich bekannter Weise zur Vermeidung von Rißbildung, z.B. in einem Loch oder einem Bogen z.B. - wie abgebildet - in einem sprialförmigen Bogen 17 aus.

Zudem befindet sich eine Schlitzgruppe 9 in einer zentralen Ringzone 10 um das Spannloch 3 herum. Die Schlitzgruppe 9 weist regelmäßig voneinander beabstandete, sich radial, vorzugsweise geradlinig von der Spannlochkante in Richtung Kranzzone 4 erstreckende Schlitze 11 auf. Im dargestellten Beispiel sind vier Schlitze 11 eingebracht, die jeweils einen Winkel von 90° zwischen sich einschließen, so daß zwischen den Schlitzen 11 vier Quadranten gebildet werden. Die Schlitzbreite beträgt zweckmäßigerweise 0,10 bis 0,25 mm. Die Schlitze 11 sind vorzugsweise gleich lang und überragen zweckmäßigerweise die Spannflanschzone 8a radial, z.B. um 10 bis 200 mm. Diese Schlitzgruppe 9 unterstützt die stoßdämpfende Wirkung der Speichenstege 15a.

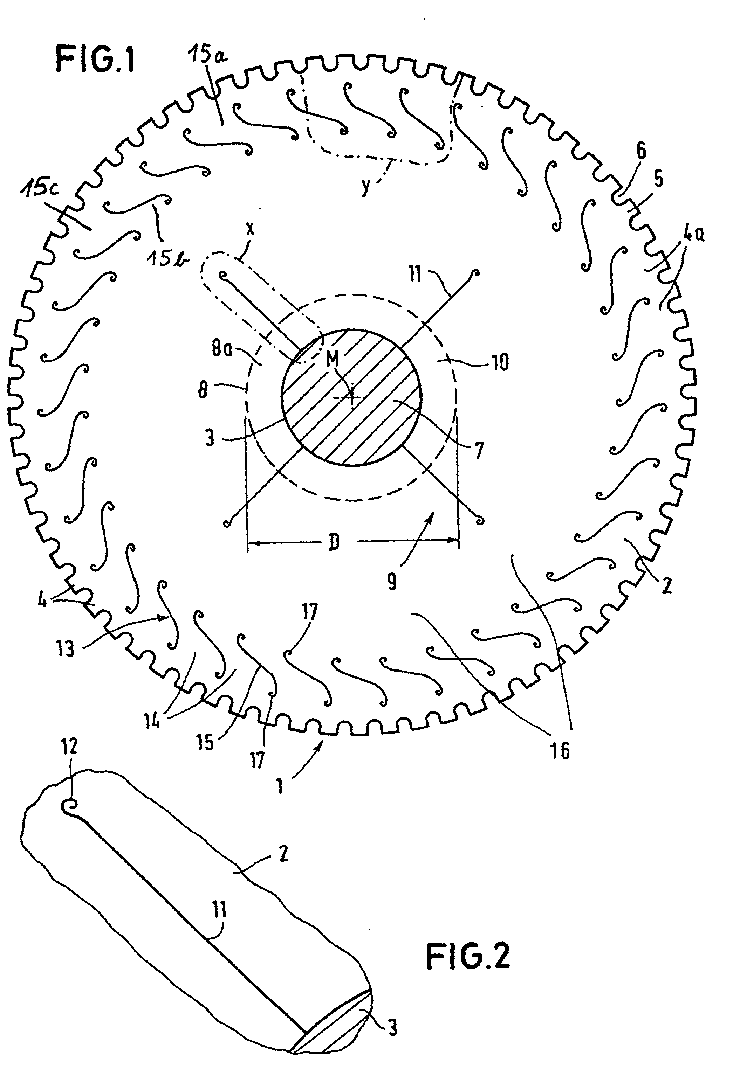

Je nach Radius des Stammblattes sind zweckmäßigerweise zwei bis acht Schlitze 11 vorgesehen. Wie üblich laufen die Schlitze 11 zur Vermeidung von Rißbildung am Schlitzende in einem Loch oder einem Bogen, z.B. in einem spiralförmigen Bogen 12 aus (Fig. 2).

Zwischen den Speichenstegen 15a der geschlitzten Ringzone 14 und der geschlitzten zentralen Ringzone 10 bzw. dem Spannloch 3 ist eine schlitzfreie Spannringzone 16 vorgesehen. Diese Ringzone 16 dient zum an sich bekannten Einbringen von Spannungen mit üblichen Mitteln in das Sägeblatt, z.B. durch Spannungsschlagen, Spannungswalzen oder mit thermischen Verfahren.

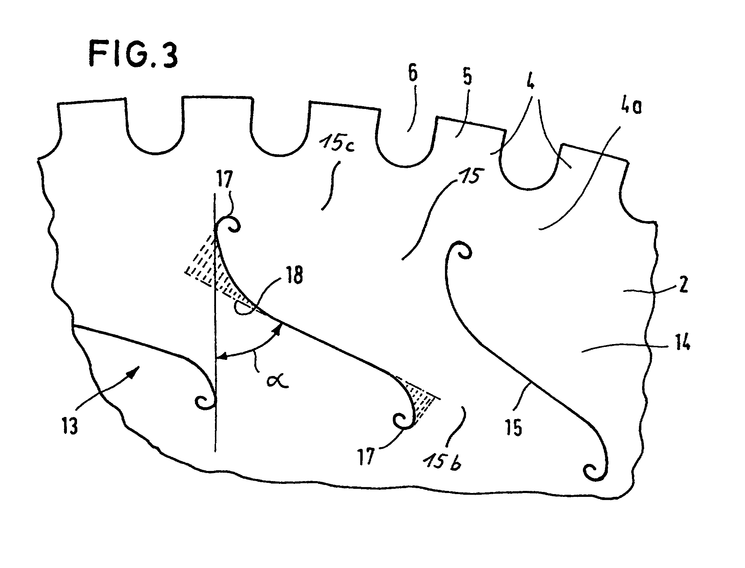

Die Anzahl und Neigung der vorzugsweise gleichmäßig beabstandeten Speichenstege 15a ist wesentlich höher als die Anzahl der Schlitze 11. Die Trennschlitze 15 der Speichenstege 15a verlaufen zweckmäßigerweise im wesentlichen s-förmig und im wesentlichen radial ausgerichtet, wobei der gemittelte - durch Schraffur in Fig. 3 verdeutlichte - auf eine Gerade 18 projizierte generalisierte Verlauf eines Schlitzes einen Neigungswinkel α zu einem Radius von 15 bis 70°, insbesondere von 30 bis 60° aufweist und zweckmäßigerweise alle Trennschlitze 15 mit dem gleichen Winkel α geneigt sind. Die Länge und Form der Trennschlitze 15 sowie ihr Abstand voneinander sind zweckmäßigerweise gleich. Daraus resultieren stoßdämpfende Speichenstege 15a gleicher Verlaufsform und mit gleicher Ausrichtung.

Die Vielzahl der Trennschlitze 15 ergibt die Speichenstege 15a zwischen den Trennschlitzen 15 nach Art von Speichen, wie sie von einem Speichenrad bekannt sind. Wesentlich ist, daß die Speichenstege 15a zum Radius des Kreissägeblatts derart geneigt sind, daß sie bei vorgegebener Drehrichtung 1a des Kreissägeblatts 1 in die nacheilende Richtung geneigt sind. Insofern ist der Wurzelbereich 15b eines Speichenstegs 15a zu seinem peripheren Endbereich 15c in Drehrichtung 1a voreilend angeordnet.

Aus dieser Konfiguration der Ausgestaltung der peripherienahen Stoßdämpfungszone 14 resultiert, daß das Kreissägeblatt im Betrieb auftretende Stöße durch elastische Verformung der Speichenstege 15a in der Kreissägeblattebene und in zur Drehrichtung 1a entgegengesetzte Richtung (tangential) und in radialer Richtung derart aufnehmen kann, daß die Bruchgefahr gemindert und die Standfestigkeit des Kreissägeblatts erhöht wird.

Diese erfindungsgemäße Stoßdämpfung gelingt besonders effektiv mit Speichenstegformen, z.B. gemäß Fig. 1 und 3, die sich zur Peripherie hin verbreitern.

Durch die hohe Anzahl und die Neigung der Speichenstege 15a können im unmittelbaren Bereich der Prozeßkräfte, die im wesentlichen in der Kranzzone 4 angreifen, die Prozeßkräfte durch elastisch ausweichende Speichenstege 15a aufgefangen werden. Dabei ist die Breite der Trennschlitze 15 so gewählt, daß die Speichenstege ausreichend Raum haben zum Ausweichen ohne sich zu berühren. Zudem ist die Breite der Trennschlitze 15 abgestellt auf die Möglichkeit, daß die Trennschlitze mit einem die Stoßdämpfung erhöhenden, auf Metallflächen haftenden, auch.noch im Schneideinsatz bei höheren Temperaturen dauerelastischen Material ausgefüllt werden können, ohne daß das Material, das flüssig einzubringen ist, durch den Spalt der Trennschlitze 15 hindurchläuft oder aus dem Trennschlitz herausläuft, bevor das Mittel ausgehärtet ist. Insofern ist die Auswahl der Schlitzbreite abgestellt auf die Bewegungsfreiheit der Speichenstege 15a und die vollständige blasen- und lunkerfreie, vollvolumige Füllbarkeit der Trennschlitze 15 sowie die ausreichende Füllmenge mit ausgehärtetem elastischen Material zur wirksam ergänzenden Stoßdämpfung.

Das Dämpfungsmaterial, das insbesondere ein Dichtungsstoff ist, führt in den Schlitzen aufgrund seiner vollvolumigen Anordnung und aufgrund seiner Materialeigenschaften Schubverformungen aus, die in Wärme umgewandelt werden. Aus dieser Umwandlung der Energie ergibt sich die zusätzliche erwünschte Stoßdämpfungswirkung.

Besonders effektiv ist ein Dichtungswerkstoff mit den Inhaltsstoffen Bitumen, Acrylat-Latex, calcitischer Füllstoff, Dispergiermittel, Verdickungsmittel, Entschäumer.

Dieser Dichtungswerkstoff gewährleistet eine Verarbeitungstemperatur bei Raumtemperaturen, eine günstige Verarbeitungsviskosität bei Raumtemperaturen, eine ralativ kurze Aushärtezeit von wenigen Stunden, eine hohe Haftfestigkeit im Verarbeitungszustand und im erhärteten Zustand am Metall, im erhärteten Zustand auch nach Jahren noch Dauerelastizität und Wärmebelastbarkeit im Temperaturbereich von etwa 15°C bis 90°C sowie Temperaturwechselbeständigkeit in diesem Temperaturbereich, so daß der Dichtungswerkstoff üblichen Einsatztemperaturen und der Kühlung mit insbesondere flüssigen Kühlmitteln stand hält; er ist außerdem resistent gegen bekannte flüssige Kühlmittel.

Ein weiteres effektives Stoßdämpfungsmaterial ist ein Dichtungswerkstoff auf der Basis eines einkomponentigen Polyurethans. Der Dichtungswerkstoff weist eine sehr gute Elastizität und gute Dehnbarkeit bei niedrigem Dehnspannungswert auf. Er haftet sehr gut an Stahl und ist alterungs- und wechselbelastungsbeständig, insbesondere in einem Temperaturbereich von etwa -30° bis +80°C. Der elastische Dichtstoff ist auch auf einfache Weise verarbeitbar.

Weiterhin sind als Stoßdämpfungsmaterial verwendbar, elastische Materialien auf Silikon- und Acryl-Basis.

Mit den erfindungsgemäßen Mitteln können die während des Trennvorganges an den Schneiden auftretenden stoßartigen Belastungen abgebaut werden. Diese stoßartigen Belastungen treten aufgrund von Inhomogenitäten, wie Einschlüssen, Armierungsstahl, unterbrochenem Schnitt bei Profilen und Rundlauffehlern der Schneiden auf. Dadurch entstehen impulsförmige höhere Zerspanungskräfte und stoßartige Belastungsspitzen, die höheren Verschleiß des Schneidwerkstoffs und Verlaufen des Kreissägeblatts bewirken können. Durch die Anordnung der erfindungsgemäßen Speichengeometrie und die Ausfüllung der Trennschlitze werden diese Mängel reduziert. Da die Speichen im unmittelbaren Bereich der Krafteinleitung angeordnet sind, lassen sie sich elastisch verformen und zwar in radialer wie auch in tangentialer Richtung, ohne daß die Blattstabilität durch seitliches Wegknicken in axialer Richtung abnimmt.

Durch die Verwendung der Speichen und deren räumliche Anordnung bezüglich der Drehrichtung des kreisscheibenförmigen Werkzeugs werden Rundlauffehler der Schneiden kompensiert. Außerdem sind höhere Schnittgeschwindigkeiten und Vorschübe möglich. Da die Festigkeit des Kreissägeblatts im Betrieb erhöht ist, können dünnere Blattdicken verwendet werden, die kleinere Schnittfugen und geringeren Materialverlust beim zu schneidenden Material verursachen. Es hat sich gezeigt, daß Schneidenausbrüche und Schneidenabbrüche verringert sind.

Da die Schlitze, die die Speichen voneinander trennen, zusätzlich mit einem Dichtungsstoff ausgefüllt sind, ergibt sich die Stoßdämpfung durch Energieumwandlung.

## Patentansprüche

1. Kreisscheibenförmiges Werkzeug mit einer periphere Schneidelemente aufweisenden Kranzzone (4) und einem zentralen Spannloch (3), mit durch Trennschlitze (15) begrenzten stoßdämpfenden Speichenstegen (15a) in einer peripherienahen Ringzone (14), wobei
a) die Speichenstege (15a) zum Radius des Kreissägeblatts derart geneigt angeordnet sind, daß sie bei vorgegebener Drehrichtung (1a) des Kreissägeblatts (1) in die nacheilende Richtung geneigt sind, so daß der Wurzelbereich (15b) eines Speichenstegs (15a) zu seinem peripherienahen Endbereich (15c) in Drehrichtung (1a) voreilend angeordnet ist,
b) die Trennschlitze (15) im wesentlichen s-förmig verlaufen, **dadurch gekennzeichnet, daß**
c) die Trennschlitze (15) 0,2 bis 0,8 mm breit sind,
d) die Trennschlitze (15) bezüglich ihres generalisierten Verlaufs einen Neigungswinkel α zu einem Radius von 15 bis 70°, insbesondere von 30 bis 60° aufweisen,
e) die Trennschlitze (15) mit einem Stoßdämpfungsmaterial ausgefüllt sind,
f) das Stoßdämpfungsmaterial ein dauerelastisches, an Metallflächen haftendes Material ist.

2. Werkzeug nach Anspruch 1, **dadurch gekennzeichnet, daß** die Ringzone (14) etwas beabstandet von der Kranzzone (4) angeordnet ist.

3. Werkzeug nach Anspruch 1 und/oder 2, **dadurch gekennzeichnet, daß** zwischen der Kranzzone (4) und der Ringzone (14) eine schmale schlitzfreie Randzone (4a) vorgesehen ist.

4. Werkzeug nach einem oder mehreren der Ansprüche 1 bis 3, **dadurch gekennzeichnet, daß** die Breite der Ringzone (14) vorzugsweise bei Werkzeugdurchmessern bis 800 mm 40 bis 120 mm, bei Werkzeugdurchmessern von 800 bis 1600 mm 80 bis 300 mm und bei Werkzeugdurchmessern über 1600 mm 80 bis 500 mm beträgt.

5. Werkzeug nach einem oder mehreren der Ansprüche 1 bis 4, **dadurch gekennzeichnet, daß** die Breite der schlitzfreien Randzone (4a) vorzugsweise bei Werkzeugdurchmessern bis 800 mm 10 bis 50 mm, bei Werkzeugdurchmessern von 800 bis 1600 mm 10 bis 80 mm und bei Werkzeugdurchmessern über 1600 mm 10 bis 150 mm beträgt.

6. Werkzeug nach einem oder mehreren der Ansprüche 1 bis 5, **dadurch gekennzeichnet, daß** die Trennschlitze (15) beidendig zur Vermeidung von Rißbildung in einem Loch oder einem Bogen, z.B. einem spiralförmigen Bogen (17) auslaufen.

7. Werkzeug nach einem oder mehreren der Ansprüche 1 bis 6, **dadurch gekennzeichnet, daß** die Länge der Speichenstege (15a) dem 0,15- bis 0,25-fachen des Stammblattradius entspricht.

8. Werkzeug nach einem oder mehreren der Ansprüche 1 bis 7, **dadurch gekennzeichnet, daß** alle Trennschlitze (15) eines Kreissägeblatts den gleichen Winkel α aufweisen.

9. Werkzeug nach einem oder mehreren der Ansprüche 1 bis 8, **dadurch gekennzeichnet, daß** die Trennschlitze (15) im wesentlichen parallel zueinander verlaufen.

10. Werkzeug nach einem oder mehreren der Ansprüche 1 bis 8, **dadurch gekennzeichnet, daß** die Trennschlitze (15) zur Peripherie hin divergieren.

11. Werkzeug nach einem oder mehreren der Ansprüche 1 bis 8, **dadurch gekennzeichnet, daß** die Trennschlitze (15) zur Peripherie hin konvergieren.

12. Werkzeug nach einem oder mehreren der Ansprüche 1 bis 11, **dadurch gekennzeichnet, daß** von der Ringzone (14) beabstandet eine weitere Ringzone (10) mit vorzugsweise 0,1 bis 0,25 mm breiten Schlitzen (11) um das Spannloch (3) herum vorgesehen ist und vom Spannloch (3) die Schlitze (11) ausgehend sich radial erstrecken, wobei zwischen den Ringzonen (10 und 14) eine schlitzfreie Ringzone (16) vorgesehen ist, in die vorzugsweise Spannungen eingebracht sind.

13. Werkzeug nach Anspruch 12, **dadurch gekennzeichnet, daß** die Schlitze (11) eine Spannflanschzone (8a) radial um 10 bis 200 mm überragen.

14. Werkzeug nach Anspruch 13, **dadurch gekennzeichnet, daß** zwei bis acht Schlitze (11) in der Ringzone vorgesehen sind.

15. Werkzeug nach einem oder mehreren der Ansprüche 12 bis 14, **dadurch gekennzeichnet, daß** das Verhältnis der Anzahl der Schlitze (15) zur Anzahl der Schlitze (11) 7:1 bis 11:1 beträgt.

16. Werkzeug nach einem oder mehreren der Ansprüche 1 bis 15, **dadurch gekennzeichnet, daß** das Stoßdämpfungsmaterial ein dauerelastischer Dichtungswerkstoff ist.

17. Werkzeug nach Anspruch 16, **dadurch gekennzeichnet, daß** der Dichtungswerkstoff im wesentlichen als Inhaltsstoffe Bitumen, Acrylat-Latex, calcitischen Füllstoff, Dispergiermittel, Verdickungsmittel und Entschäumer aufweist.

18. Werkzeug nach Anspruch 16, **dadurch gekennzeichnet, daß** der Dichtungswerkstoff ein Dichtungswerkstoff auf Basis eines einkomponentigen Polyurethans ist.

19. Werkzeug nach einem oder mehreren der Ansprüche 1 bis 15, **dadurch gekennzeichnet, daß** das Stoßdämpfungsmaterial ein Material auf Silikon-Basis ist.

20. Werkzeug nach einem oder mehreren der Ansprüche 1 bis 15, **dadurch gekennzeichnet, daß** das Stoßdämpfungsmaterial ein Material auf Acryl-Basis ist.

## Claims

1. Circular-disc-shaped tool comprising a rim zone (4) having peripheral cutting elements, and a central clamping hole (3) having shock-absorbing spoke webs (15a), defined by separating slots (15), in an annular zone (14) close to the periphery, in which arrangement
a) the spoke webs (15a) are arranged so as to be inclined relative to the radius of the circular saw blade in such a way that, with a predetermined direction of rotation (1a) of the circular saw blade (1), they are inclined in the trailing direction, so that the root region (15b) of a spoke web (15a) is arranged so as to be in advance of its end region (15c) close to the periphery in the direction of rotation (1a),
b) the separating slots (15) run essentially in an S-shape,
**characterized in that**
c) the separating slots (15) are 0.2 to 0.8 mm wide,
d) the separating slots (15), with regard to their generalized course, have an angle of inclination α relative to a radius of 15 to 70°, in particular 30 to 60°,
e) the separating slots (15) are filled with a shock-absorbing material,
f) the shock-absorbing material is a permanently elastic material adhering to metal surfaces.

2. Tool according to Claim 1, **characterized in that** the annular zone (14) is arranged at a slight distance from the rim zone (4).

3. Tool according to Claim 1 and/or 2, **characterized in that** a narrow, slot-free marginal zone (4a) is provided between the rim zone (4) and the annular zone (14).

4. Tool according to one or more of Claims 1 to 3, **characterized in that** the width of the annular zone (14) is preferably 40 to 120 mm at tool diameters up to 800 mm, 80 to 300 mm at tool diameters from 800 to 1600 mm, and 80 to 500 mm at tool diameters over 1600 mm.

5. Tool according to one or more of Claims 1 to 4, **characterized in that** the width of the slot-free marginal zone (4a) is preferably 10 to 50 mm at tool diameters up to 800 mm, 10 to 80 mm at tool diameters from 800 to 1600 mm, and 10 to 150 mm at tool diameters over 1600 mm.

6. Tool according to one or more of Claims 1 to 5, **characterized in that** the separating slots (15), for avoiding crack formation, run out on both sides in a hole or curve, e.g. a spiral curve (17).

7. Tool according to one or more of Claims 1 to 6, **characterized in that** the length of the spoke webs (15a) corresponds to 0.15 to 0.25 times the radius of the blade body.

8. Tool according to one or more of Claims 1 to 7, **characterized in that** all the separating slots (15) of a circular saw blade have the same angle α.

9. Tool according to one or more of Claims 1 to 8, **characterized in that** the separating slots (15) run essentially parallel to one another.

10. Tool according to one or more of Claims 1 to 8, **characterized in that** the separating slots (15) diverge towards the periphery.

11. Tool according to one or more of Claims 1 to 8, **characterized in that** the separating slots (15) converge towards the periphery.

12. Tool according to one or more of Claims 1 to 11, **characterized in that**, at a distance from the annular zone (14), a further annular zone (10) having slots (11) preferably 0.1 to 0.25 mm wide is provided around the clamping hole (3), and the slots (11) extend radially starting from the clamping hole (3), a slot-free annular zone (16), into which stresses are preferably introduced, being provided between the annular zones (10 and 14).

13. Tool according to Claim 12, **characterized in that** the slots (11) project radially beyond a clamping-flange zone (Ba) by 10 to 200 mm.

14. Tool according to Claim 13, **characterized in that** two to eight slots (11) are provided in the annular zone.

15. Tool according to one or more of Claims 12 to 14, **characterized in that** the ratio of the number of slots (15) to the number of slots (11) is 7:1 to 11:1.

16. Tool according to one or more of Claims 1 to 15, **characterized in that** the shock-absorbing material is a permanently elastic sealing material.

17. Tool according to Claim 16, **characterized in that** the sealing material essentially contains, as components, bitumen, acrylate latex, calcitic filler, dispersing agent, thickening agent and antifoaming agent,

18. Tool according to Claim 16, **characterized in that** the sealing material is a sealing material on the basis of a one-component polyurethane.

19. Tool according to one or more of Claims 1 to 15, **characterized in that** the shock-absorbing material is a material on a silicone basis.

20. Tool according to one or more of Claims 1 to 15, **characterized in that** the shock-absorbing material is a material on an acrylic basis.

## Revendications

1. Outil en forme de disque circulaire comprenant une zone de pourtour (4) qui présente des éléments de coupe périphériques et un trou de serrage central (3), des langues radiales (15a) amortisseuses des chocs, limitées par des fentes séparatrices (15), dans une zone annulaire (14) proche de la périphérie, dans lequel
a) les langues radiales (15a) sont disposées inclinées par rapport au rayon de la feuille de la scie circulaire, de telle manière que, dans un sens de rotation donné (1a) de la feuille (1) de la scie circulaire, elles soient inclinées dans le sens rétrograde, de sorte que la région de racine (15b) d'une langue radiale (15a) est disposée en avant dans le sens de la rotation (1a) par rapport à sa région extrême (15c) proche de la périphérie,
b) les fentes séparatrices (15) s'étendent sensiblement en forme de S, **caractérisé en ce que**
c) les fentes séparatrices (15) sont larges de 0,2 à 0,8 mm,
d) en allure générale, les fentes séparatrices (15) présentent un angle d'inclinaison α de 15 à 70°, en particulier de 30 à 60°, par rapport à un rayon,
e) les fentes séparatrices (15) sont comblées d'une matière amortisseuse des chocs,
f) la matière amortisseuse des chocs est une matière durablement élastique, qui adhère aux surfaces métalliques.

2. Outil selon la revendication 1, **caractérisé en ce que** la zone annulaire (14) est un peu espacée de la zone de pourtour (4).

3. Outil selon la revendication 1 et/ou 2, **caractérisé en ce qu'**une zone marginale étroite (4a) dépourvue de fentes est prévue entre la zone de pourtour (4) et la zone annulaire (14).

4. Outil selon une ou plusieurs des revendications 1 à 3, **caractérisé en ce que** la largeur de la zone annulaire (14) est de préférence de 40 à 120 mm pour des diamètres d'outil allant jusqu'à 800 mm, de 80 à 300 mm pour des diamètres d'outil de 800 à 1600 mm et de 80 à 500 mm pour des diamètres d'outil de plus de 1600 mm.

5. Outil selon une ou plusieurs des revendications 1 à 4, **caractérisé en ce que** la largeur de la zone marginale (4a) dépourvue de fentes est de préférence de 10 à 50 mm pour des diamètres d'outil allant jusqu'à 800 mm, de 10 à 80 mm pour des diamètres d'outil de 800 à 1600 mm et de 10 à 150 mm pour des diamètres d'outil de plus de 1600 mm.

6. Outil selon une ou plusieurs des revendications 1 à 5, **caractérisé en ce que**, pour éviter le criquage, les fentes séparatrices (15) se terminent à leurs deux extrémités par un trou ou par un arc, par exemple, un arc (17) en forme de spirale.

7. Outil selon une ou plusieurs des revendications 1 à 6, **caractérisé en ce que** la longueur des langues radiales (15a) correspond à 0,15 - 0,25 fois le rayon de la feuille de départ.

8. Outil selon une ou plusieurs des revendications 1 à 7, **caractérisé en ce que** toutes les fentes séparatrices (15) d'une feuille de scie circulaire présentent le même angle α.

9. Outil selon une ou plusieurs des revendications 1 à 8, **caractérisé en ce que** les fentes séparatrices (15) s'étendent sensiblement parallèlement entre elles.

10. Outil selon une ou plusieurs des revendications 1 à 8, **caractérisé en ce que** les fentes séparatrices (15) divergent vers la périphérie.

11. Outil selon une ou plusieurs des revendications 1 à 8, **caractérisé en ce que** les fentes séparatrices (15) convergent vers la périphérie.

12. Outil selon une ou plusieurs des revendications 1 à 11, **caractérisé en ce qu'**il est prévu, à distance de la zone annulaire (14), une autre zone annulaire (10) présentant des fentes (11), de préférence larges de 0,1 à 0, 25 mm, autour du trou de serrage (3) et les fentes (11) s'étendent radialement à partir du trou de serrage (3), cependant qu'il est prévu entre les zones annulaires (10 et 14) une zone annulaire (16) dépourvue de fentes, dans laquelle des tensions sont de préférence engendrées.

13. Outil selon la revendication 12, **caractérisé en ce que** les fentes (11) débordent radialement de 10 à 200 mm au-delà de la zone de la collerette de serrage (8a).

14. Outil selon la revendication 13, **caractérisé en ce que** deux à huit fentes (11) sont prévues dans la zone annulaire.

15. Outil selon une ou plusieurs des revendications 12 à 14, **caractérisé en ce que** le rapport du nombre des fentes (15) au nombre des fentes (11) est de 7: 1 à 11 : 1.

16. Outil selon une ou plusieurs des revendications 1 à 15, **caractérisé en ce que** la matière amortisseuse des chocs est une matière pour joints durablement élastique.

17. Outil selon la revendication 16, **caractérisé en ce que** la matière pour joints comprend essentiellement comme substances constitutives du bitume, un latex d'acrylate, une charge calcitique, un agent dispersant, un agent épaississant et un démoussant.

18. Outil selon la revendication 16, **caractérisé en ce que** la matière pour joints est une matière pour joints à base d'un polyuréthane monocomposant.

19. Outil selon une ou plusieurs des revendications 1 à 15, **caractérisé en ce que** la matière amortisseuse des chocs est une matière à base de silicone.

20. Outil selon une ou plusieurs des revendications 1 à 15, **caractérisé en ce que** la matière amortisseuse des chocs est une matière à base acrylique.
